# EUROPÄISCHE PATENTSCHRIFT

(11) **EP 1 943 978 B1**
(45) Veröffentlichungstag und Bekanntmachung des Hinweises auf die Patenterteilung: **06.04.2016**
(21) Anmeldenummer: 07000589.7
(22) Anmeldetag: 12.01.2007
(51) Int. Cl.: A61C 8/00

(54) **Implantatadapterstück**
Implant adaptor
Adaptateur d'implant

(43) Veröffentlichungstag der Anmeldung: 16.07.2008
(73) Patentinhaber: ZL Microdent-Attachment GmbH & Co. KG, 58339 Breckerfeld (DE)
(72) Erfinder: Böschemeyer, Thomas, 58313 Herdecke (DE); Clostermann, Volkhard-Hagen, 58097 Hagen (DE); Dragotto, Nico, 44536 Lünen (DE); Graf, Hans-Ludwig, 04451 Panitzsch (DE)
(74) Vertreter: Patentanwälte Dörner & Kötter PartG mbB

(56) Entgegenhaltungen:
- WO-A-01/49199
- WO-A-98/52488
- WO-A-2005/058178
- US-A- 5 873 721

## Beschreibung

Die vorliegende Erfindung betrifft eine Vorrichtung zur Verbindung eines Aufbaus mit einem zahnmedizinischen Implantat nach dem Patentanspruch 1.

Der Einsatz zahnmedizinischer Implantate ist fester Bestandteil der Zahnmedizin. Implantate sind in den unterschiedlichsten Ausführungen bekannt und werden entweder in künstliche in einem Kiefer eingebrachte Öffnungen eingeschraubt oder - sofern der Knochenkontaktbereich eines Implantats der Wurzelform eines extrahierten Zahnes nachgebildet wurde - in das so entstandene, leere Zahnfach eingesetzt. Für den nachfolgenden knöchernen Einheilprozess wird in das Implantat eine Einheilkappe eingeschraubt. Zum Ende des Einheilprozesses wird die Einheilkappe freigelegt und anschließend entfernt. Nachfolgend wird in das Implantat ein Gingivaformer eingeschraubt, welcher die Abheilung des Zahnfleisches beeinflusst. Nach vollständiger Abheilung des Zahnfleisches wird der Gingivaformer entfernt und es wird ein Abformpfosten in das Implantat eingeschraubt, wonach ein Abdruck für die Zahntechnik erstellt wird, welche basierend hierauf die Mesio- bzw. Suprakonstruktion fertigt. Nach Fertigstellung der Mesio- bzw. Suprakonstruktion wird der Gingivaformer entfernt und die Mesio- bzw. Suprakonstruktion in das Implantat eingesetzt. Da die Positionierung des Implantats in der Regel nicht exakt der erforderlichen Flucht des Aufbaus entspricht, ist es erforderlich, eine Vielzahl von Aufbauten mit unterschiedlich abgewinkelten Aufbaupfosten vorzuhalten, auf denen nachfolgend die Mesio- bzw. Suprakonstruktion befestigt werden kann. Aus den vorgehaltenen Aufbauten wird derjenige mit der korrekten Neigung ausgewählt und nachfolgend wird die Mesio- bzw. Suprakonstruktion an diesem befestigt. Die hierfür erforderliche Vorratshaltung erweist sich jedoch als sehr kostenintensiv, da ein solcher Satz an Aufbauten für unterschiedliche Implantatdurchmesser- und -ausführungen vorzuhalten ist. In der US5873721 ist eine Vorrichtung zur Justierung eines Aufbaus an einem zahnmedizinischen Implantat gemäß Oberbegriff des Patentanspruchs 1 beschrieben.

Hier will die Erfindung Abhilfe schaffen. Der Erfindung liegt die Aufgabe zu Grunde, eine Vorrichtung zu schaffen, welche eine Reduzierung der Vielzahl vorzuhaltener Aufbauten ermöglicht. Gemäß der Erfindung wird diese Aufgabe durch die Merkmale des Patentanspruchs 1 gelöst.

Mit der Erfindung ist eine Vorrichtung geschaffen, welche eine Reduzierung der Vielzahl vorzuhaltener Aufbauten ermöglicht.

Dadurch, dass das Anschlussstück zur Fixierung des Aufbaus eine Außenverzahnung aufweist,-ist eine schrittweise Justierung des Aufbaus über die Teilung der Außenverzahnung ermöglicht. Bevorzugt ist das Anschlussstück zur Fixierung an einem zahnmedizinischen Implantat als Außensechskantstück ausgebildet. Andere Ausgestaltungen, bspw. als Außenvielkant oder Sternform sind möglich.

Dadurch, dass das Mittelstück konusförmig ausgebildet ist,-ist relativ zu dem Implantat eine Ausbuchtung erzielt, welche einem Rückgang des Zahnfleisches bzw. des Kieferknochens entgegenwirkt (sog. Platform-Switching). Dabei ist in dem Mittelstück an seiner dem Implantat zugewandten Seite umlaufend ein Innenkonus eingebracht. Dieser Innenkonus liegt an einem entsprechenden an dem Implantat angeformten Außenkonus an und bewirkt eine Umlenkung der von außen auf das Implantat einwirkenden Kräfte zur Implantatachse hin. Hierdurch wird eine Entlastung des umliegenden Kieferknochens erzielt. Darüber hinaus ermöglicht der umlaufende Innenkonus eine gute Abdichtung zwischen der Vorrichtung und dem Implantat.

In Ausgestaltung der Erfindung weist das Anschlussstück zur Fixierung des Aufbaus Rastmittel auf. Hierdurch ist eine einfache und zuverlässige Befestigungsmöglichkeit für einen Aufbau geschaffen. Vorteilhaft sind die Rastmittel Schnappanker.

In weiterer Ausgestaltung der Erfindung weist das Mittelstück umlaufend eine Oxidkeramikschicht auf. Hierdurch ist im Falle des Zurückweichens von Zahnfleisch- und / oder Kieferknochen ein Hervortreten der titanfarbenen Vorrichtung verhindert. Durch das bereichsweise Versehen des Mittelstücks mit einer Oxidkeramikschicht wird die Zahnkeramik optisch bis zum Implantat weitergeführt.

In Weiterbildung der Erfindung ist an dem Anschlussstück zur Fixierung des Aufbaus ein zylindrisches Rohrstück zur Aufnahme eines Vollkeramikaufbaus angeformt. Hierdurch ist ein einstückiger Anschluss eines Vollkeramikaufbaus ermöglicht, wobei das zylindrische Rohrstück je nach erforderlicher Neigung des Vollkeramikaufbaus relativ zum Implantat gekürzt werden kann.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

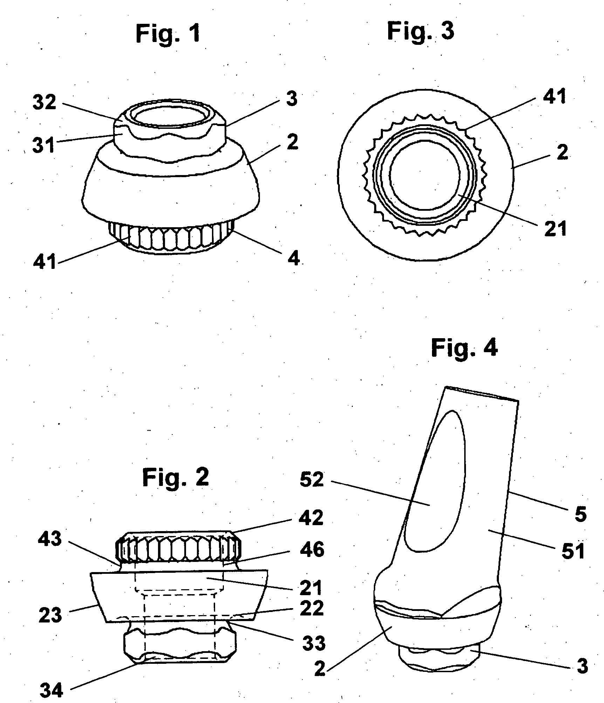

- Figur 1: die dreidimensionale Darstellung einer Vorrichtung mit Verzahnung für eine rotatorische Positionierung des Aufbaus;
- Figur 2: die Darstellung der Vorrichtung aus Figur 1 in der Ansicht von vorne;
- Figur 3: die Vorrichtung aus Figur 1 in der Ansicht von unten;
- Figur 4: die Vorrichtung aus Figur 1 mit montiertem Aufbau;
- Figur 5: die Vorrichtung aus Figur 4 in Exlosionsdarstellung mit Befestigungsschrauben;
- Figur 6: den Aufbau aus Figur 5 in Schnittdarstellung;

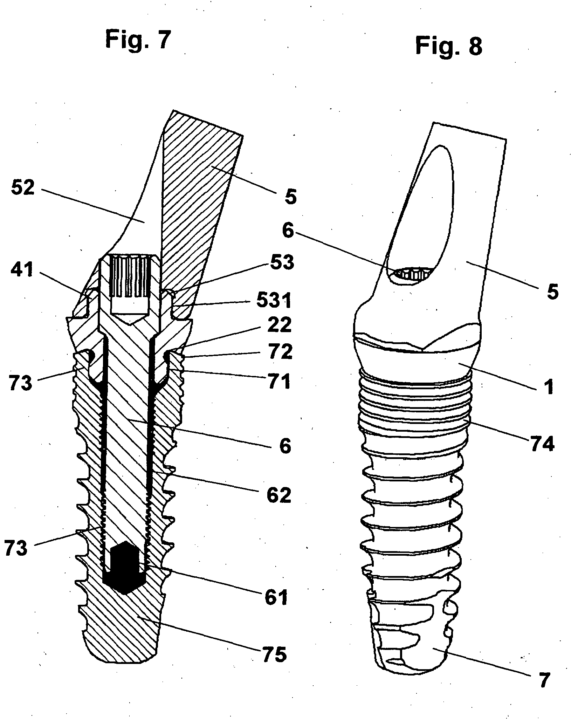

- Figur 7: die Darstellung eines Implantats mit Vorrichtung und Aufbau gemäß Figur 4;
- Figur 8: die dreidimensionale Darstellung des Implantataufbaus aus Figur 7;
- Figur 9: den Aufbau aus Figur 6 mit Querbohrung zur Fixierung in Schnittdarstellung;
- Figur 10: den Aufbau aus Figur 7 in dreidimensionaler Darstellung;
- Figur 11: die Darstellung eines Implantats mit montierter Vorrichtung gemäß Figur 1 und Aufbau gemäß Figur 7;
- Figur 12: die dreidimensionale Darstellung einer Vorrichtung mit Schnappanker;
- Figur 13: die Vorrichtung aus Figur 11 in der Ansicht von vorne;
- Figur 14: die dreidimensionale Darstellung eines Aufbaus mit Schnappankeraufnahme;
- Figur 15: den Aufbau gemäß Figur 13 in der Ansicht von vorne;
- Figur 16: die Schnittdarstellung eines Implantats mit Vorrichtung gemäß Figur 11 und Aufbau gemäß Figur 13;
- Figur 17: die Darstellung einer Vorrichtung mit angeformtem Aufbaurohr in der Ansicht von vorne und
- Figur 18: die Vorrichtung aus Figur 17 in der Draufsicht.

Die als Ausführungsbeispiel gewählte Vorrichtung zur Justierung eines Aufbaus an einem zahnmedizinischen Implantat ist in Art eines Adapterstücks 1 ausgeführt und besteht im Wesentlichen aus einem Mittelstück 2, an das zu beiden Seiten ein Anschlussstück 3, 4 angeformt ist. Das Mittelstück ist weitgehend konusförmig ausgeführt. An seiner dem implantatseitigen Anschlussstück 3 zugewandten Seite ist in das Mittelstück 2 ein Innenkonus 22 eingeformt, der über einen Freischnitt 33 in das Anschlussstück 3 übergeht. Im Ausführungsbeispiel ist das Mittelstück 2 umlaufend mit einer Zirkonoxidschicht 23 versehen. Zentriert ist in das Mittelstück 2 eine Stufenbohrung 21 eingebracht.

Das implantatseitige Anschlussstück 3 ist an das Mittelstück 2 angeformt. Umlaufend ist das Anschlussstück 3 mit einem Außensechskant 31 versehen. Alternativ ist jede geeignete geometrische Form wie beispielsweise eine Torx- oder Sternform möglich. Endseitig ist das Anschlussstück 3 umlaufend mit einer Phase 32 versehen.

An der dem Anschlussstück 3 gegenüberliegenden Seite des Mittelstücks 2 ist an das Mittelstück 2 ein aufbauseitiges Anschlussstück 4 angeformt. Das Anschlussstück 4 weist außen umlaufend eine Außenverzahnung 41 auf. Oberhalb der Außenverzahnung 41 ist das Anschlussstück 4 mit einer umlaufenden Phase 42 versehen. Im Übergang zwischen Mittelstück 2 und Anschlussstück 4 ist in das Anschlussstück 4 ein Freischnitt 43 eingebracht. Sowohl in das Anschlussstück 3 als auch in das Anschlussstück 4 ist zentriert eine Bohrung eingebracht, an die sich jeweils die Stufenbohrung 21 des Mittelstücks 2 anschließt.

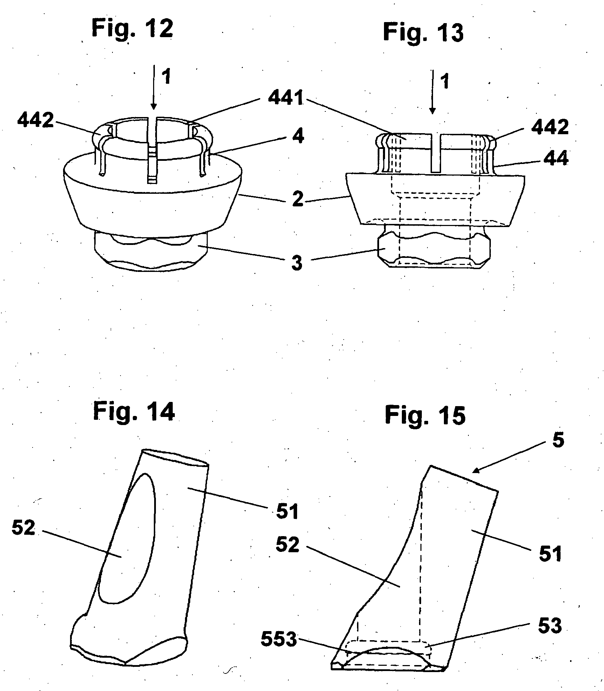

Im Ausführungsbeispiel gemäß Figur 13 ist das aufbauseitige Anschlussstück 4 mit einem Schnappanker 44 versehen. Der Schnappanker 44 ist ringförmig ausgebildet und besteht im Wesentlichen aus Federelementen 441, die beabstandet zueinander angeordnet sind und an deren nach außen gerichteten Enden außen eine Wulst 442 angeformt ist.

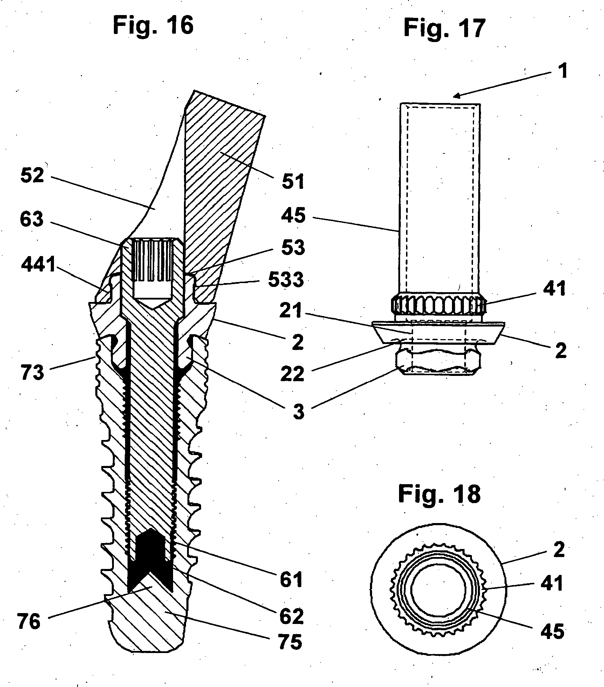

Im Ausführungsbeispiel gemäß Figur 17 ist das aufbauseitige Anschlussstück 4 wiederum umlaufend mit einer Außenverzahnung 41 versehen. Endseitig ist an das Anschlussstück 4 ein Rohrstück 45 zur Aufnahme eines Vollkeramikaufbaus angeformt.

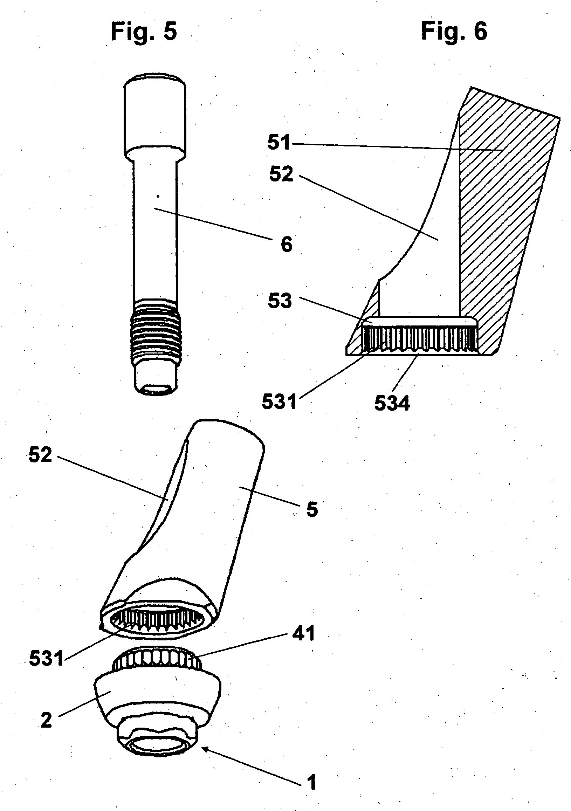

Der als Ausführungsbeispiel gewählte Aufbau 5 gemäß Figur 6 besteht im Wesentlichen aus einem winklig angestellten Pfostenstück 51, das lotrecht mit einer Durchgangsbohrung 52 versehen ist. An seinem dem Implantat 7 zugewandten Ende mündet die Bohrung 52 in eine Aufnahme 53, welche innen umlaufend mit einer Innenverzahnung 531 zur Aufnahme der Außenverzahnung 41 des Adapterstücks 1 eingebracht ist. Die Teilung der Innenverzahnung 531 entspricht dabei der Teilung der Außenverzahnung 41 des Anschlussstücks 4 des Adapterstücks 1. Zur Erleichterung der Montage des Aufbaus 5 ist die Aufnahme 53 an ihrer dem Implantat 7 zugewandten Seite unterhalb der Innenverzahnung 531 mit einem Innenkonus 534 versehen. Im Ausführungsbeispiel ist der Aufbau 5 aus Titan hergestellt.

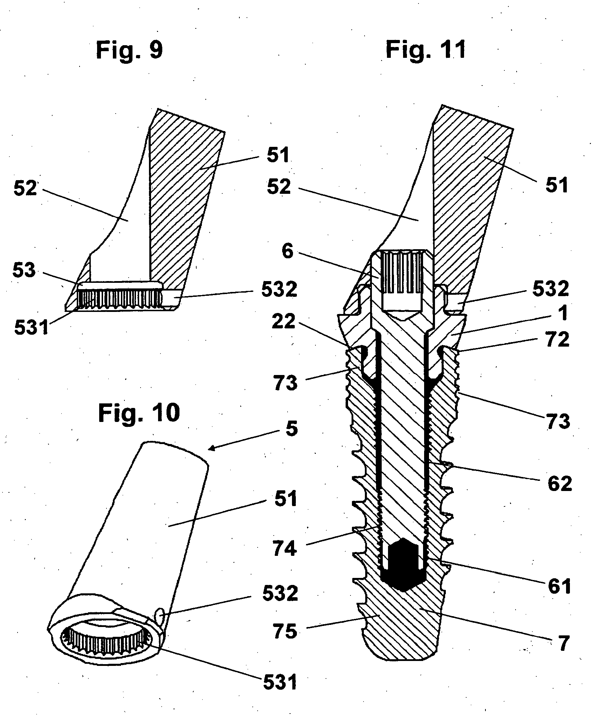

Im Ausführungsbeispiel gemäß Figur 9 ist in den Aufbau 5 zusätzlich eine Querbohrung 532 eingebracht, welche in der Aufnahme 53 mündet. Die Querbohrung 532 dient der Aufnahme eines - nicht dargestellten - Sicherungsbolzens.

Im Ausführungsbeispiel gemäß Figur 15 ist die Aufnahme 53 an Stelle einer Innenverzahnung mit einem Hinterschnitt 533 zur Aufnahme des Schnappankers 44 des Anschlussstücks 4 des Adapterstücks 1 versehen. Die Innenkontur der Aufnahme 53 ist dabei derart ausgebildet, dass die Federelemente 441 des Schnappankers 44 vorgespannt an der Innenwandung der Aufnahme 53 anliegen, wobei die Wulst 442 der Federelemente 441 hinter den Hinterschnitt 533 greifen.

Die erfindungsgemäße, in Form eines Adapterstücks 1 ausgebildete Vorrichtung wird mit ihrem Anschlussstück 3 in das Implantat 7 eingesetzt, wobei der Außensechskant 31 in den Innensechskant 71 des Implantats 7 eingeführt wird. Hierdurch ist das Adapterstück 1 drehsicher in dem Implantat 7 gehalten. Das mit einem Außenkonus 72 versehene Anschlussstück 73 des Implantats 7 liegt dabei in dem Innenkonus 22 des Mittelstücks 2 an, wobei der Innenkonus 22 des Mittelstücks 2 derart ausgebildet ist, dass er eine größere Steigung aufweist, als der Außenkonus 72 des Implantats 7, so dass durch Andrücken des Adapters 1 gegen das Implantat 7 der äußere Rand des Innenkonus 22 durch den Außenkonus 72 des Implantats 7 federnd nach außen gedrückt wird, wodurch eine Abdichtung zwischen Innenkonus 22 und Außenkonus 72 bewirkt wird.

Der Aufbau 5 wird nun derart auf das Adapterstück 1 aufgesetzt, dass das Anschlussstück 4 in die Aufnahme 53 des Aufbaus 5 eingereift. Im Ausführungsbeispiel gemäß Figur 11 ist das Anschlussstück 4 des Adapterstücks 1 mit einer Außenverzahnung 41 versehen, welche in die Innenverzahnung 531 der Aufnahme 53 des Aufbaus 5 eingreift. Durch schrittweises Verdrehen des Aufbaus 5 relativ zum Adapterstück 1 wird die gewünschte Lage des Aufbaus 5 justiert, wobei die Schrittweite der Verdrehung durch die Teilung der Verzahnungen 41, 531 bestimmt ist. Nach Erreichen der optimalen Position wird eine Schraube 6 durch die Bohrung 52 des Aufbaus 5 sowie durch die Bohrung 34, 21, 46 des Adapterstücks 1 bewegt und in das Innengewinde 74 des Grundkörpers 75 des Implantats 7 eingeschraubt. Dabei wird das Adapterstück 1 gegen das Implantat 7 gepresst, wodurch die zuvor beschriebene Dichtwirkung zwischen dem Innenkonus 22 des Mittelstücks 2 und dem Außenkonus 72 des Implantats 7 erzielt wird. Zur zusätzlichen Sicherung der Position des Aufbaus 5 wird nachfolgend in die Querbohrung 532 ein - nicht dargestellter - Sicherungsbolzen eingeführt. In Abwandlung kann an Stelle der Schraube 6 auch ein anderweitig ausgeführtes Befestigungselement zum Einsatz kommen, beispielsweise ein Rastbolzen zur Befestigung in einem Implantat mit gewindeloser Sackbohrung.

Im Ausführungsbeispiel weist die Schraube 6 endseitig eine Aufnahme 61 für eine - nicht dargestellte - fluidgefüllte Kapsel auf, welche im Zuge des Einschraubens der Schraube 6 in das Implantat 7 zerstört wird, wodurch die interimplantären Zwischenräume durch das austretende Fluid 62 verfüllt werden.

Im Ausführungsbeispiel gemäß Figur 16 ist das Anschlussstück 4 des Adapterstücks 1 mit einem Schnappanker 44 versehen. Der Schnappanker 44 greift in die Aufnahme 53 des Aufbaus 5 ein, so dass die Wulst 442 der Federelemente 441 den Hinterschnitt 533 der Aufnahme 53 hintergreifen. Der Kopf 63 der Schraube 6 ist in diesem Ausführungsbeispiel leicht konisch ausgebildet, so dass im Zuge des Einbringens der Schraube 6 in das Implantat 7 die Federelemente 441 des Schnappankers 44 des Anschlussstücks 4 zusätzlich gegen die Aufnahme 53 des Aufbaus 5 gepresst werden. In dieser Konstellation ist der Aufbau 5 relativ zum Adapterstück 1 stufenlos verdrehbar. Die Verdrehsicherung erfolgt letztendlich durch das Einschrauben der Schraube 6, wodurch die Wulst 442 des Schnapparikers 44 in den Hinterschnitt 533 der Aufnahme 53 des Aufbaus 5 gepresst wird, wodurch eine zusätzliche kraftschlüssige Verbindung erzielt wird. Auch in diesem Ausführungsbeispiel weist die Schraube 6 eine Aufnahme 61 für eine - nicht dargestellte - fluidgefüllte Kapsel auf. Zur definierten Zerstörung dieser Kapsel beim Einschrauben der Schraube 6 in das Implantat 7 ist in den Grundkörper 75 des Implantats 7 mittig eine Spitze 76 angeformt. Nach Verschrauben von Aufbau 5 und Adapterstück 1 mit dem Implantat 7 werden wiederum die innerimplantären Zwischenräume durch das in der Kapsel enthaltene Fluid 62 - nach Zerstörung der Kapsel durch die Spitze 76 - verfüllt.

## Patentansprüche

1. Vorrichtung zur Justierung eines Aufbaus an einem zahnmedizinischen Implantat, umfassend ein Adapterstück (1) mit im Wesentlichen ringförmigem Mittelstück (2), an dessen Unterseite ein Anschlussstück (3) zur Fixierung an einem zahnmedizinischen Implantat (7) angeordnet ist und an dessen Oberseite ein Anschlussstück (4) zur Fixierung des Aufbaus (5) angeordnet ist, **dadurch gekennzeichnet, dass** das Anschlussstück (4) zur Fixierung des Aufbaus eine Außenverzahnung (41) aufweist, wobei das Mittelstück (2) konusförmig ausgebildet ist und wobei in das Mittelstück (2) an seiner dem Implantat (7) zugewandten Seite umlaufend ein Innenkonus (22) eingebracht ist.

2. Vorrichtung nach Anspruch 1, **dadurch gekennzeichnet, dass** das Anschlussstück (3) zur Fixierung an einem zahnmedizinischen Implantat als Außensechskantstück ausgebildet ist.

3. Vorrichtung nach einem der Ansprüche 1 oder 2, **dadurch gekennzeichnet, dass** das Anschlussstück (4) zur Fixierung des Aufbaus (5) Rastmittel (441) aufweist.

4. Vorrichtung nach Anspruch 3, **dadurch gekennzeichnet, dass** die Rastmittel (441) Schnappanker sind.

5. Vorrichtung nach einem der vorgenannten Ansprüche, **dadurch gekennzeichnet, dass** das Mittelstück (2) umlaufend eine Zirkonoxidschicht oder eine Zirkondioxidschicht aufweist.

6. Vorrichtung nach einem der vorgenannten Ansprüche, **dadurch gekennzeichnet, dass** an dem Anschlussstück (4) zur Fixierung des Aufbaus (5) ein zylindrisches Rohrstück (45) zur Aufnahme eines Vollkeramikaufbaus angeformt ist.

## Claims

1. Device for adjustment of an abutment on a dental implant comprising an adaptor piece (1) having a substantially annular centre piece (2), to the underside of which a connecting piece (3) for fixing to a dental implant (7) is arranged and to the upper side of which a connecting piece (4) for fixing the abutment (5) is arranged, **characterised in that** the connecting piece (4) for fixing the abutment has external teeth (41), wherein the centre piece (2) is conical and wherein in the centre piece (2) an inner cone (22) is inserted circumferentially on its side facing the implant (7).

2. Device according to claim 1, **characterised in that** the connecting piece (3) for fixing on a dental implant is designed as an external hexagon piece.

3. Device according to one of claims 1 or 2, **characterised in that** the connecting piece (4) for fixing the abutment (5) has locking means (441).

4. Device according to claim 3, **characterised in that** the locking means (441) are snap anchors.

5. Device according to one of the previous claims, **characterised in that** the centre piece (2) has a circumferential zirconium oxide layer or a zirconium dioxide layer.

6. Device according to one of the previous claims, **characterised in that** a cylindrical pipe section (45) for receiving an all-ceramic abutment is moulded to the connecting piece (4) for fixing the abutment (5).

## Revendications

1. Dispositif pour ajuster une reconstruction contre un implant dentaire, comprenant un adaptateur (1) avec pièce médiane (2) essentiellement annulaire contre le côté inférieur de laquelle est agencée un raccord (3) pour l'immobilisation contre un implant (7) dentaire et contre le côté supérieur de laquelle est agencé un raccord (4) pour immobiliser la reconstruction (5), **caractérisé en ce que** le raccord (4) servant à immobiliser la reconstruction présente une denture externe (41), sachant que la pièce médiane (2) est configurée en cône et sachant que dans la pièce médiane (2), sur son côté regardant l'implant (7), a été introduit un cône intérieur (22) périphérique.

2. Dispositif selon la revendication 1, **caractérisé en ce que** le raccord (3) servant à l'immobilisation contre un implant dentaire est configurée comme pièce à six pans hexagonaux externes.

3. Dispositif selon l'une des revendications 1 ou 2, **caractérisé en ce que** le raccord (4) présente des moyens de crantage (441) pour immobiliser la reconstruction (5).

4. Dispositif selon la revendication 3, **caractérisé en ce que** les moyens de crantage (441) sont des ancres à déclic.

5. Dispositif selon l'une des revendications précédentes, **caractérisé en ce que** la pièce médiane (2) présente périphériquement une couche d'oxyde de zircone ou une couche de dioxyde de zircone.

6. Dispositif selon l'une des revendications précédentes, **caractérisé en ce que** contre le raccord (4), pour immobiliser la reconstruction (5), une pièce tubulaire (45) cylindrique a été formée pour recevoir une reconstruction céramocéramique.
